## Europäisches Patentamt
## European Patent Office
## Office européen des brevets

(11) Veröffentlichungsnummer: **0 221 848**
**A1**

## (12) EUROPÄISCHE PATENTANMELDUNG

(21) Anmeldenummer: **86810479.5**

(22) Anmeldetag: **27.10.86**

(51) Int. Cl.⁴: **A 47 J 36/02**
**A 47 J 27/00**

(30) Priorität: **31.10.85 CH 4682/85**

(43) Veröffentlichungstag der Anmeldung:
**13.05.87 Patentblatt 87/20**

(84) Benannte Vertragsstaaten:
**AT BE CH DE ES FR GB GR IT LI LU NL SE**

(71) Anmelder: **Heinrich Kuhn Metallwarenfabrik Aktiengesellschaft**

**CH-8486 Rikon(CH)**

(72) Erfinder: **Kuhn, Jacques**
**Mühleweg 3**
**CH-8486 Rikon(CH)**

(74) Vertreter: **White, William et al,**
**Isler AG Patentanwalts-Bureau Walchestrasse 23**
**CH-8006 Zürich(CH)**

(54) **Kochgefäss.**

(57) Das Kochgefäss besteht aus einer Schale (1) mit einer Wand (1a) und einem Boden (1b), an dem eine gut wärmeleitende Platte (3) befestigt ist. Die Schutzwand (2) ist aus Verbundmaterial gebildet und hat eine Aussenschicht aus rostfreiem Metall (5), eine Mittelschicht aus ferromagnetischem Material (6) und eine innere Schicht (7) aus rostfreiem Stahl. An der Stirnseite (4) ist die ferromagnetische Schicht (6) durch hochziehen der Aussenschicht (5) und Verbinden mit dem Material der Schale (1) vollständig verdeckt.

Durch diese Ausbildung ist das Kochgefäss sowohl für Induktionsplatten als auch für konventionelle Elektroplatten, Keramikkochfelder oder für Gasherde geeignet.

Fig. 1

Fig. 2

0221848

## Kochgefäss

Ein Kochgefäss aus rostfreiem Stahl ist allgemein bekannt. Die Metallplatte verleiht dem Boden eine hohe Stabilität, gute Wärmeleitung und gute Wärmeverteilung über die ganze Bodenfläche. Als Material werden z.B. Kupfer oder Aluminium verwendet. Damit der Boden bei guter thermischer Belastung hohe Stabilität und damit gute Wärmeübertragungseigenschaften hat wird diese Metallplatte mit einer Schicht aus rostfreiem Stahl überdeckt. In neuerer Zeit sind Induktionskochherde bekannt geworden, bei welchen unter der Kochgefässauflage eine Induktionsspule angeordnet ist. Diese wird heute mit einer Frequenz von beispielsweise 25 kHz gespeist. Für solche Induktionskochherde sind Kochgefässe aus Eisenblech oder -guss mit oder ohne Korrosionsschutz oder Kochtöpfe aus einem Verbundmaterial mit einer Schicht aus ferromagnetischem Material und aussenliegender Schicht aus nichtrostendem Material geeignet. Induktionskochherde haben bezüglich des Kochgutes einen hohen thermischen Wirkungsgrad, und sie lassen sich sehr gut regulieren, weil, im Gegensatz zu konventionellen Elektroplatten, praktisch keine Wärmespeicher zwischen der elektrischen Energiespeisung und dem Kochgefäss vorhanden ist. Die Wärme wird direkt im ferromagnetischen Teil des Kochtopfes durch Wirbelströme erzeugt. Induktionskochherde vereinigen gewissermassen die Vorzüge des Gaskochens mit jenen konventioneller Elektrokochherde.

Die bekannten Kochgefässe für Induktionskochherde haben allerdings verschiedene Nachteile: Kochgefässe aus Eisenblech oder -guss haben wegen der gegenüber Kupfer oder Aluminium schlechteren Wärmeleitfähigkeit innerhalb der Bodenpartie eine schlechtere Wärmeverteilung. Bei thermischer Belastung deformieren sich die Böden in einem Masse, dass der Wärmeübergang zwischen Platten und Kochgefäss, insbesondere bei Verwendung auf konventionellen elektrischen Kochherden mit metallischer oder keramischer Abdeckung zu thermischen Verlusten führt. Ausserdem müssen Kochgefässe aus Eisenblech zum Schutz gegen Rostbildung bei Lagerung und Gebrauch geschützt sein, sei es durch emaillierten, galvanischen Lack-, Oel- oder Fettoberflächenschutz. Bei Verbundmaterialien ist die Stirnfläche am Rand korrosionsgefährdet, weil die ferromagnetische Schicht freigelegt ist, insbesondere wenn die Kochtöpfe in Geschirrspülmaschinen gereinigt und entfettet werden. Emaille ist an dieser Randpartie zudem schlagempfindlich, so dass dieser Rand geschützt werden muss.

Die Aufgabe der vorliegenden Erfindung besteht darin, einen Universal-Kochtopf zu schaffen, der sich für induktive, konventionelle elektrische Beheizung und Beheizung mit offener Flamme optimal eignet. Diese Aufgabe wird durch die Merkmale gemäss Anspruch 1 gelöst.

Nachfolgend werden Ausführungsbeispiele der Erfindung anhand der Zeichnung erläutert. Darin zeigt:

Fig. 1    einen Teilquerschnitt durch ein Kochgefäss,

Fig. 2    eine Schnittansicht des Teils II in Fig. 1 in vergrössertem Massstab,

Fig. 3    eine Schnittansicht eines doppelwandigen Kochgefässes, und

Fig. 4a    je eine Schnittansicht einer weiteren Ausführungs-
und 4b    form des Randes bei einem Kochtopf nach Fig. 3.

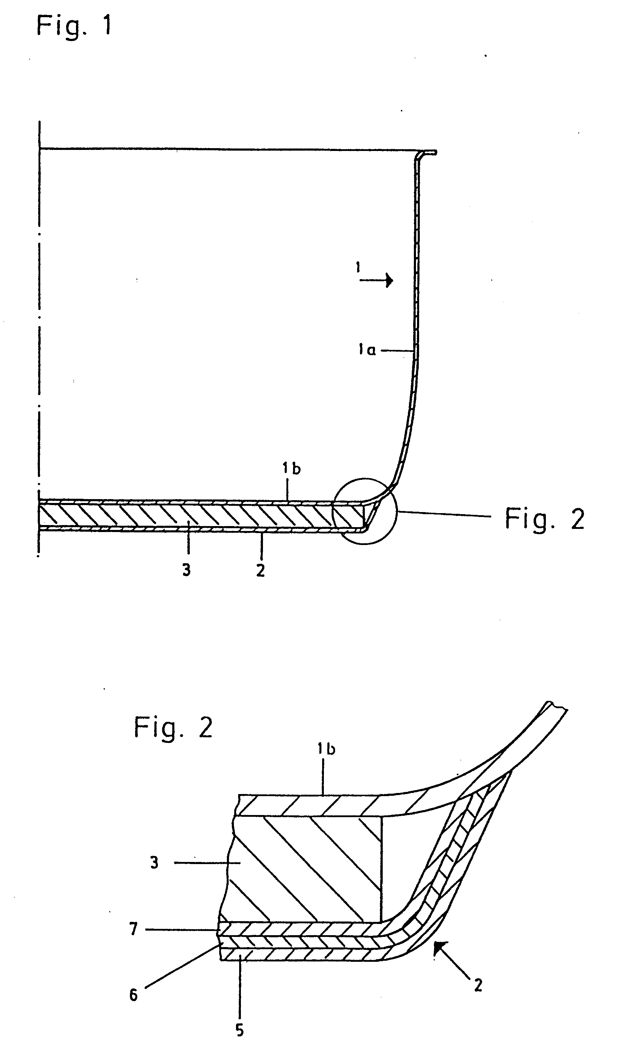

Bei dem in Fig. 1 und 2 dargestellten Kochgefäss ist der Topf eine einstückige Schale 1 mit einer Wandpartie 1a und hat eine innere Wand 1 und eine Bodenpartie 1b. Im Boden ist an der Schale 1 eine gut wärmeleitende Platte 3 aus zum Beispiel Aluminium angeordnet, die mit der Schale 1 einstückig verbunden ist. Damit wird eine gute Wärmeübertragung und eine gleichmässige Wärmeverteilung über die
ganze Bodenfläche gewährleistet. Aussen an dieser Platte 3
befindet sich eine Abdeckwand 2. Die Abdeckwand 2 besteht
gemäss Fig. 2 aus einem Verbundmaterial und umfasst eine
Aussenschicht 5 aus z.B. rostfreiem Stahl, eine Mittelschicht 6 aus einem ferromagnetischen Material wie z.B.
Eisen und eine Innenschicht 7 aus z.B. rostfreiem Stahl.
Von der Abdeckwand 2 kann nur die Aussenschicht 5 oder es können
alle Plattierschichten 5,6,7 hochgezogen sein und mit dem Boden
1b der Schale 1 durch Verschweissung, Verlötung oder Verklebung
gasdicht verbunden sein. Damit ist die ferromagnetische Mittelschicht 6
stirnseitig gegen Sicht und Korrosionen geschützt und gratfrei gemacht.

Die Abdeckwand 2 ist, ausgehend von handelsüblichen Materialien, z.B. unter 1,2 mm dick, vorzugsweise etwa 0,8 mm.
Hohe Wirkungsgrade können erreicht werden, wenn die Schichten 5 und 7 aus rostfreiem Material dünn gehalten sind, z.B.
unter 0,2 mm.

Weil die ferromagnetische Mittelschicht 6 relativ dünn ist,
könnten sich durch die Eindringtiefe des Wechselfeldes
Nebenschlüsse ergeben, wenn diese Schicht direkt mit dem
elektrisch gut leitenden Material z.B. Aluminium aus der Platte 3 verbunden wäre. Dies würde die von einem Induktionskochherd übertragbare Leistung erheblich reduzieren.

Anstelle der direkten Verbindung der Aussenschicht 5 mit der Bodenpartie 1b der Schale 1 könnte diese Abdeckschicht 2 gemäss dem deutschen Patent Nr. 27 34 733 im Abstand von der Wandpartie 1b der Schale 1 hochgezogen und am verbreiterten Rand mit dieser einstückig verbunden sein.

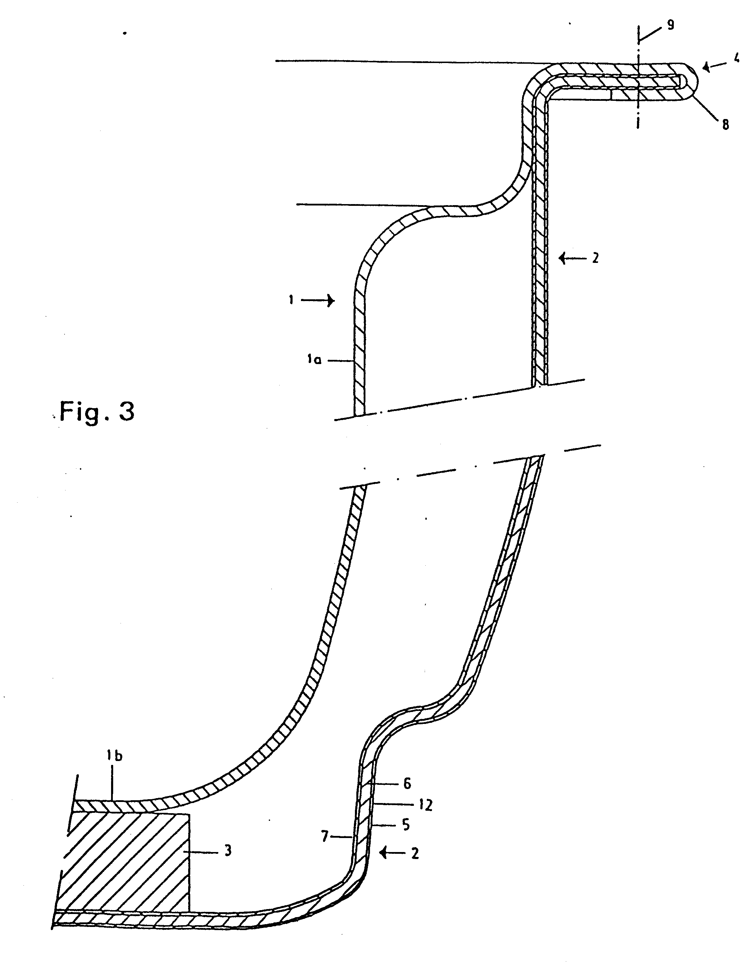

Die Ueberdeckung der ferromagnetischen Schicht 6 kann gemäss Fig. 3 durch Umbördelung 4 des Randes der Schale 1 geschehen, wobei an der Stelle 9 dann die Verschweissung durchgehend ist.

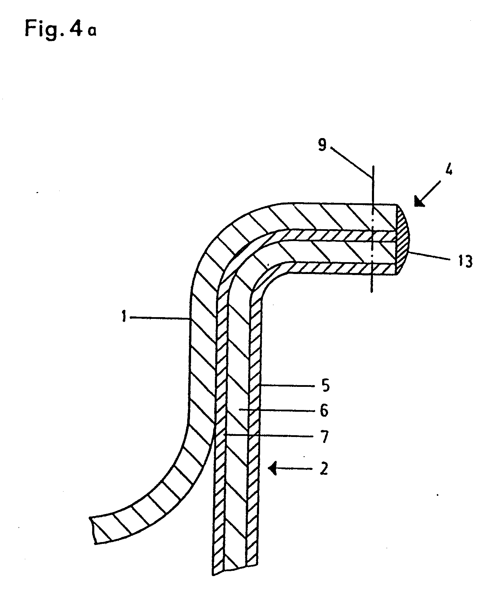

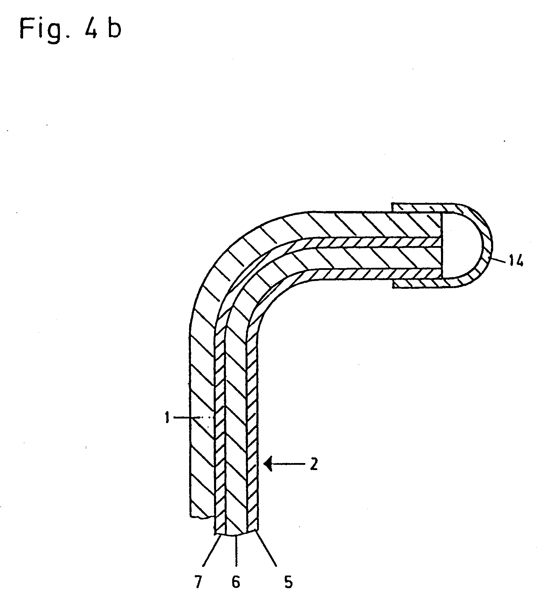

Bei den Ausführungsformen nach Fig. 4 sind die innere Wand 1 und die äussere Wand 2 längs der Schweissnaht 9 aussenbündig abgeschnitten. In Fig. 4a schützt ein Ueberzug 13 die Randpartie und damit besonders auch die ferromagnetische Schicht und verbindet die Innenwand 1 mit der äusseren Schicht 5 des Verbundmaterials. Ein solcher Ueberzug kann mit einem galvanischen Verfahren oder mittels Auftragsschweissung realisiert werden. Die freigelegte ferromagnetische Schicht der Randpartie kann auch mit einer rostfreien Ringmanschette abgedeckt werden, wobei diese mit Vorteil verklebt, verlötet oder verschweisst wird.

Nach Fig. 4b ist vorgesehen eine Manschette 14 um die Stirnflächen der Schale 1 und der Abdeckwand 2 herum zu legen
und mit dieser gasdicht zu verbinden.

Patentansprüche

1.      Kochtopf mit einer eine Wandpartie (1a) und eine Bodenpartie (1b) aufweisenden Schale (1) aus nichtrostendem Metall mit einer die Bodenpartie (1b) auf deren Aussenseite bedeckenden und mit ihr einstückig verbundenen wärmeleitenden Metallplatte (3) und mit einer die Unterseite der Metallplatte (3) bedeckenden und mit dieser ebenfalls einstückig verbundenen Abdeckwand (2), dadurch gekennzeichnet, dass die Abdeckwand (2) als Verbundmaterial aus wenigstens zwei Schichten ausgebildet ist, von welchen Schichten die Aussenschicht (5) aus nichtrostendem Material und die zweite Schicht (6) aus einem ferromagnetischen Material bestehen, und dass Mittel (5', 13) vorhanden sind, um wenigstens die aus ferromagnetischem Material bestehende zweite Schicht (6) stirnseitig zu überdecken.

2.      Kochtopf nach Patentanspruch 1, dadurch gekennzeichnet, dass das Verbundmaterial der Abdeckwand (2) dreischichtig ausgebildet ist, derart, dass zwischen der aus ferromagnetischem Material bestehenden zweiten Schicht (6) und der Metallplatte (3) eine dritte Schicht (7) vorhanden ist, und dass diese dritte Schicht aus einem Metall mit elektrischer Leitfähigkeit besteht, die kleiner ist als diejenige der Metallplatte (3).

3. Kochtopf nach Patentanspruch 2, dadurch gekennzeichnet, dass wenigstens die dritte Schicht (7) aus rostfreiem Stahl besteht.

4. Kochtopf nach einem der Patentansprüche 1 bis 3, dadurch gekennzeichnet, dass die Abdeckwand (2) topfförmig ausgebildet ist, die Wandpartie im Abstand umfasst und mit der Schale (1) an deren Rand luftdicht verbunden ist.

5. Kochtopf nach Patentanspruch 1, dadurch gekennzeichnet, dass die Stirnseite (4) der zweiten Schicht (6) durch eine Manschette aus rostfreiem Metall abgedeckt ist.

6. Kochtopf nach Patentanspruch 1, dadurch gekennzeichnet, dass wenigstens die Stirnseite der zweiten Schicht (6) durch einen Ueberzug (13) aus einem nichtrostenden Material überdeckt ist.

7. Kochtopf nach Patentanspruch 4, dadurch gekennzeichnet, dass die zweite Schicht (6) am Rand (4) durch die um die Abdeckwand (2) gebördelte Randpartie der Schale (1) verdeckt ist.

8.      Kochtopf nach Patentanspruch 7, dadurch gekennzeichnet, dass die Bördelung mit dem Rand der Schale (1) durchgehend am ganzen Umfang verschweisst, verlötet oder verklebt ist.

9.      Kochtopf nach Patentanspruch 7, dadurch gekennzeichnet, dass die Schutzwand (2) an ihrem Rand durch eine die Stirnwand umfassende Manschette verschlossen ist.

10.      Kochtopf nach einem der Patentansprüche 1 bis 3, dadurch gekennzeichnet, dass die Abdeckwand (2) um den Rand der Metallplatte (3) herum hochgezogen, und dass wenigstens die Aussenschicht (5) mit der Schale (1) gasdicht verbundden ist.

11.      Kochtopf nach einem der Patentansprüche 1 bis 7, dadurch gekennzeichnet, dass die Stirnseite der Abdeckwand (2) gasdicht verschliessend in die Metallplatte (3) eingreift.

0221848

Fig. 1

Fig. 2

Fig. 3

Fig. 4a

Fig. 4 b

## Europäisches Patentamt

## EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| X | EP-A-0 111 867 (AARDAL)<br><br>* Insgesamt * | 1-4,10 ,11 | A 47 J 36/02<br>A 47 J 27/00 |
| | --- | | |
| A | EP-A-0 036 978<br>(WUERTTEMBERGISCHE<br>METALLWARENFABRIK AG)<br>* Seite 1, Zeile 30 - Seite 2,<br>Zeile 2; Seite 4, Zeilen 26-33;<br>Figuren 12,13 * | 5,6,9 | |
| | --- | | |
| A | FR-A-2 437 184 (ARDAL)<br>* Figuren 7,8 * | 7,8 | |
| | --- | | |
| A | DE-B-1 083 999<br>(WUERTTEMBERGISCHE<br>METALLWARENFABRIK AG)<br>* Insgesamt * | 5,9 | |
| | | | RECHERCHIERTE<br>SACHGEBIETE (Int Cl 4) |
| | --- | | |
| A | FR-A-2 290 125 (MITSUBISHI)<br>* Insgesamt * | 1,4 | A 47 J<br>H 05 B |
| | --- | | |
| A | FR-A-2 440 179 (ZANI SERAFINO)<br>* Insgesamt * | 1 | |
| | --- | | |
| D,A | CH-A- 604 643 (KUHN) | | |
| | ----- | | |

Der vorliegende Recherchenbericht wurde für alle Patentansprüche erstellt.

| Recherchenort | Abschlußdatum der Recherche | Prüfer |
|---|---|---|
| DEN HAAG | 04-02-1987 | SCHARTZ J. |